# EUROPÄISCHE PATENTSCHRIFT

(11) **EP 2 877 372 B1**
(45) Veröffentlichungstag und Bekanntmachung des Hinweises auf die Patenterteilung: **15.02.2017**
(21) Anmeldenummer: 13717161.7
(22) Anmeldetag: 27.03.2013
(51) Int. Cl.: B60R 9/04

(54) **DACHTRÄGEREINRICHTUNG FÜR EIN KRAFTFAHRZEUG**
ROOF RACK ASSEMBLY FOR A MOTOR VEHICLE
STRUCTURE DE BARRES DE TOIT POUR VÉHICULE AUTOMOBILE

(30) Priorität: 25.07.2012 DE 102012014703
(43) Veröffentlichungstag der Anmeldung: 03.06.2015
(73) Patentinhaber: Audi AG, 85045 Ingolstadt (DE)
(72) Erfinder: GÜNTHNER, Robert-Johann, 85080 Gaimersheim (DE)
(74) Vertreter: Mader, Wilfried
(86) Internationale Anmeldenummer: PCT/EP2013/000913
(87) Internationale Veröffentlichungsnummer: WO 2014/015919

(56) Entgegenhaltungen:
- EP-A1- 0 718 155
- WO-A1-2009/038479
- DE-A1-102004 031 224
- DE-A1-102009 038 935

## Beschreibung

Die Erfindung betrifft eine Dachträgereinrichtung für ein Kraftfahrzeug, mit einer auf einem Fahrzeugdach des Kraftfahrzeugs befestigbaren Dachreling und einem auf der Dachreling montierbaren Lastenträger, wobei der Lastenträger zumindest eine Befestigungsvorrichtung aufweist, die nach der Montage des Lastenträgers die Dachreling wenigstens bereichsweise beidseitig umgreift und die über einen Rastvorsprung verfügt, der nach der Montage durch eine Durchtrittsöffnung in eine Rastausnehmung der Dachreling eingreift.

Dachträgereinrichtungen der eingangs genannten Art sind aus dem Stand der Technik bekannt. Sie bestehen aus der Dachreling, welche wenigstens eine, häufig jedoch mehrere, beispielsweise zwei, Dachleisten aufweist, die parallel zueinander, beispielsweise in Längsrichtung des Kraftfahrzeugs, auf dem Fahrzeugdach des Kraftfahrzeugs befestigbar sind. Nach einer ersten Befestigung verbleibt die Dachreling üblicherweise permanent an dem Fahrzeugdach. Die Befestigung der Dachreling beziehungsweise der Dachleiste erfolgt beispielsweise, indem wenigstens ein Befestigungselement eine Dachhaut, auf welcher die Dachreling wenigstens bereichsweise aufliegt, durchgreift und auf ihrer anderen Seite mit einem Gegenelement und/oder einem Dachgerüst des Kraftfahrzeugs verbunden ist. Die Dachleiste der Dachreling liegt bevorzugt wenigstens bereichsweise beabstandet zu dem Fahrzeugdach vor, weist also beispielsweise zwei Dachleistenfüße auf, mit welchen sie in Kontakt mit dem Fahrzeugdach tritt. Beispielsweise ist die Dachleiste derart gebogen, dass ihre beiden Endbereiche die Dachleistenfüße ausbilden, während ein zwischen den Dachleistenfüßen gelegener Bereich der Dachleiste zu dem Fahrzeugdach beabstandet ist.

Zu der Dachträgereinrichtung gehört weiterhin der Lastenträger, welcher auf der Dachreling montierbar ist. Das bedeutet, dass der Lastenträger nicht permanent an der Dachreling vorliegen muss, sondern beispielsweise erst bei beabsichtigter Beförderung von Lasten mithilfe des Kraftfahrzeugs angebracht wird. Entsprechend ist bevorzugt eine manuell von einem Benutzer der Dachträgereinrichtung lösbare Befestigung des Lastenträgers an der Dachreling vorgesehen. Um fahrdynamische und sicherheitstechnische Anforderungen erfüllen zu können, kann es vorgesehen sein, dass ein Steuergerät des Kraftfahrzeugs bereits bei montiertem Lastenträger, also unabhängig davon, ob dieser beladen ist oder nicht, in einer anderen Betriebsart betrieben wird als bei nichtmontiertem Lastenträger. Die erstere Betriebsart berücksichtigt dabei beispielsweise bereits eine potentielle Dachlast durch den Lastenträger beziehungsweise eine auf oder an dem Lastenträger angeordnete Last. Dazu löst beispielsweise der Lastenträger bei seiner Montage eine Schaltvorrichtung aus, sodass seine Anwesenheit detektiert werden kann. Handelsübliche Lastenträger lassen sich jedoch auch an Stellen montieren, für welche die Schaltvorrichtung die Anwesenheit des Lastenträgers nicht erkennen kann. Es kann auch der Fall sein, dass der Lastenträger nicht mit der Schaltvorrichtung zusammenarbeiten kann, insbesondere wenn ein nicht für das Kraftfahrzeug zugelassener Lastenträger verwendet wird. Somit besteht die Gefahr, dass bei nicht sachgemäßer Befestigung des Lastenträgers beziehungsweise der gesamten Dachträgereinrichtung das Steuergerät und damit das Kraftfahrzeug in der falschen Betriebsart betrieben wird. EP 0 718 155 A1 offenbart eine Dachträgereinrichtung für ein Kraftfahrzeug gemäß dem Oberbegriff des Anspruchs 1.

Es ist daher Aufgabe der Erfindung, eine Dachträgereinrichtung für ein Kraftfahrzeug vorzustellen, welche den eingangs genannten Nachteil nicht aufweist, sondern zum einen eine sichere Befestigung des Lastenträgers auf der Dachreling und zum anderen eine zuverlässige Erkennung des Lastenträgers gewährleistet. Außerdem soll die Dachträgereinrichtung eine gefällige Optik aufweisen.

Dies wird erfindungsgemäß mit einer Dachträgereinrichtung mit den Merkmalen des Anspruchs 1 erreicht. Dabei sind eine Abdeckung, mittels der die Durchtrittsöffnung in nichtmontiertem Zustand des Lastenträgers verschließbar ist, und eine Erfassungseinrichtung, mittels welcher ein Abdeckungszustand der Durchtrittsöffnung feststellbar ist, vorgesehen. Das Halten des Lastenträgers an der Dachreling nach der Montage wird mithilfe der Befestigungsvorrichtung erzielt. Bei der Montage wird üblicherweise der Lastenträger wenigstens bereichsweise auf die Dachreling aufgelegt, sodass Kräfte in vertikaler Richtung von dem Lastenträger in die Dachreling und über diese in das Fahrzeugdach eingeleitet werden können. Das Einleiten der Kräfte kann dabei an mehreren Stellen oder ausschließlich über die Befestigungsvorrichtung vorgesehen sein. Um eine Befestigung auch in lateraler Richtung zu erzielen, umgreift die Befestigungsvorrichtung die Dachreling nach der Montage wenigstens bereichsweise beidseitig. Dabei ist insbesondere vorgesehen, dass jede der Dachleisten jeweils beidseitig umgriffen ist, sodass also die Befestigungsvorrichtung in lateraler Richtung jeweils unmittelbar an jede der Dachleisten angrenzt und sich an ihr abstützt. Unter dem beidseitigen Umgreifen ist dabei das Vorliegen der Befestigungsvorrichtung auf einer ersten Seite und auf einer der ersten Seite gegenüberliegenden zweiten Seite zu verstehen, sodass die Dachreling beziehungsweise die Dachleiste von der Befestigungsvorrichtung zumindest in lateraler Richtung, also quer sowohl zu einer Längsrichtung als auch einer Vertikalrichtung des Kraftfahrzeugs, gehalten ist.

Ein unbeabsichtigtes Abheben des Lastenträgers von der Dachreling nach der Montage in der Vertikalrichtung soll üblicherweise durch eine Rastverbindung beziehungsweise Hintergriffsverbindung verhindert werden. Zu diesem Zweck ist an dem Lastenträger beziehungsweise an der Befestigungsvorrichtung der Rastvorsprung vorgesehen, welcher nach der Montage auf zumindest einer Seite der Dachreling beziehungsweise zumindest einer der Dachleisten vorliegt. Vorzugsweise ist jeder Dachleiste wenigstens ein solcher Befestigungsvorsprung zugeordnet. Die Dachreling beziehungsweise die Dachleiste verfügt nun über zumindest eine Rastausnehmung mit einer nach außen gewandten Durchtrittsöffnung. Bei der Montage des Lastenträgers kann mithin der Rastvorsprung des Lastenträgers durch die Durchtrittsöffnung hindurchtreten, sodass er in die Rastausnehmung hineingelangt und nach der Montage in ihr vorliegt. Bei wenigstens bereichsweiser Anordnung des Rastvorsprungs in der Rastausnehmung ist die Rastverbindung beziehungsweise Hintergriffsverbindung zwischen dem Lastenträger und der Dachreling hergestellt, sodass der Lastenträger in vertikaler Richtung nicht mehr von der Dachreling entfernt werden kann.

Um eine gefällige Optik der Dachträgereinrichtung zu erzielen, soll die Abdeckung vorgesehen sein. Diese verschließt die Durchtrittsöffnung und verdeckt mithin die Rastausnehmung solange der Rastvorsprung nicht in diese eingreift, also in dem nichtmontierten Zustand des Lastenträgers. Mithilfe der Abdeckung kann auch die zuverlässige Erkennung des Lastenträgers an der Dachreling vorgenommen werden. Zu diesem Zweck dient die Erfassungseinrichtung, mit welcher der Abdeckungszustand der Durchtrittsöffnung feststellbar ist, also ob die Abdeckung die Durchtrittsöffnung verschließt, oder ob sie durch die Montage des Lastenträgers und das damit einhergehende Eingreifen des Rastvorsprungs in die Rastausnehmung verlagert ist, sodass die Durchtrittsöffnung wenigstens bereichsweise freigegeben ist. Besonders vorteilhaft ist es, wenn die Abdeckung die Durchtrittsöffnung in nichtmontiertem Zustand des Lastenträgers vollständig verschließt, also die Rastausnehmung vollständig abdeckt.

Liegen mehrere Dachleisten vor, so sind mehrere Rastausnehmungen besonders vorteilhaft auf voneinander abgewandten Seiten der Dachleisten vorgesehen, also insbesondere jeweils in lateraler Richtung bezüglich des Kraftfahrzeugs nach außen weisend. Bezüglich der Dachreling beziehungsweise der Dachleiste kann eine Befestigungsaufnahme für ein Befestigungsmittel gegenüberliegend von der Rastausnehmung vorgesehen sein, mit welchem der Lastenträger zusätzlich an der Dachreling befestigbar ist. Das Befestigungsmittel und die Befestigungsaufnahme können beispielsweise als Gewindebolzen und dazugehörige Gewindebohrung beziehungsweise dazugehöriger Gewindeeinsatz ausgebildet sein. Aus einer derartigen Ausführungsform resultiert eine sehr hohe Sicherheit der Dachträgereinrichtung, weil diese in allen Fahrsituationen stets zuverlässig an dem Fahrzeug gehalten ist.

Mittels der Erfassungseinrichtung kann zuverlässig festgestellt werden, ob der Lastenträger an der Dachreling vorliegt. Zu diesem Zweck wird nicht das Vorhandensein des Dachträgers selbst, sondern vielmehr die Stellung der Abdeckung hinsichtlich der Rastausnehmung beziehungsweise der Durchtrittsöffnung festgestellt. Es ist nämlich unerlässlich, dass die Abdeckung zur Montage des Lastenträgers an der Dachreling wenigstens teilweise zur Freigabe der Durchtrittsöffnung geöffnet wird. Damit gibt es zwei eindeutige Zustände, die vorzugsweise berührungslos erfasst und nachfolgend beispielsweise dem Steuergerät zugeführt werden können. Ist die Durchtrittsöffnung von der Abdeckung wenigstens teilweise verschlossen, insbesondere vollständig verschlossen, so ist der Lastenträger mit Sicherheit nicht an der Dachreling montiert. Ist dagegen die Durchtrittsöffnung nicht von der Abdeckung verschlossen, insbesondere vollständig freigegeben, so wird auf das Vorliegen des Lastenträgers an der Dachreling erkannt.

Eine Weiterbildung der Erfindung sieht vor, dass die Abdeckung als Klappe ausgebildet und schwenkbar an der Dachreling gelagert ist. Die Abdeckung soll also unverlierbar bezüglich der Dachreling gehalten sein. Zu diesem Zweck liegt sie als Klappe vor, welche um eine Schwenkachse drehbar befestigt ist, beispielsweise an der Dachreling.

Eine Weiterbildung der Erfindung sieht vor, dass die Erfassungseinrichtung wenigstens einen Magnet und zumindest einen Magnetfeldsensor aufweist. Dies erlaubt eine äußerst einfache und verschleißarme Ausbildung der Erfassungseinrichtung, weil der Magnet und der Magnetfeldsensor üblicherweise keine beweglichen Elemente aufweisen. Dabei ist der Magnetfeldsensor - der auch als Magnetometer bezeichnet werden kann - beispielsweise als Hall-Sensor, XMR-Sensor oder dergleichen ausgeführt. Der Magnet und der Magnetfeldsensor sind derart zueinander angeordnet, dass sie durch die Verlagerung der Abdeckung bezüglich der Durchtrittsöffnung zum Verschließen oder Freigeben derselben in unterschiedliche Relativpositionen zueinander gebracht werden. Beispielsweise ist der Magnet bei Anordnung der Abdeckung zum Verschließen der Durchtrittsöffnung (Geschlossenstellung) näher an dem Magnetfeldsensor angeordnet als bei freigegebener Durchtrittsöffnung (Offenstellung) oder umgekehrt. Mithilfe des Magnetfeldsensors kann nun festgestellt werden, ob sich der Magnet in dessen Nähe befindet, und entsprechend auf die Anordnung der Abdeckung bezüglich der Durchtrittsöffnung geschlossen werden.

Eine Weiterbildung der Erfindung sieht vor, dass der Magnet an der Abdeckung und der Magnetfeldsensor an der Dachreling befestigt ist. Der Magnet und der Magnetfeldsensor sind bei einer solchen Ausführungsform zueinander verlagerbar. Selbstverständlich kann auch die umgekehrte Anordnung gewählt werden, bei welcher der Magnet an der Dachreling und der Magnetfeldsensor an der Abdeckung vorgesehen ist.

Eine Weiterbildung der Erfindung sieht vor, dass die Abdeckung nach der Montage in der Rastausnehmung wenigstens bereichsweise aufgenommen ist. Vor der Montage soll die Abdeckung die Durchtrittsöffnung verschließen, welche selbst nicht Bestandteil der Rastausnehmung ist, sondern vielmehr zwischen dieser und einer Außenumgebung der Dachträgereinrichtung vorliegt. Insoweit greift die Abdeckung vor der Montage nicht in die Rastausnehmung ein. Bei der Montage wird nun der Rastvorsprung in die Rastausnehmung hineinverlagert, wobei er die Abdeckung ebenfalls in diese hineindrängt. Entsprechend liegt die Abdeckung nach der Montage zu einem größeren Anteil in der Rastausnehmung vor als dies vor der Montage der Fall ist. Anders ausgedrückt ist die Abdeckung nach der Montage näher an einer Rückwand der Rastausnehmung angeordnet als in nichtmontiertem Zustand des Lastenträgers. Vorzugsweise ist die Abdeckung elastisch ausgebildet oder zumindest mit einer Federkraft beaufschlagt, beispielsweise durch eine entsprechende Lagerung an der Dachreling oder durch eine zumindest bereichsweise elastische Ausbildung, durch welche sie in nichtmontiertem Zustand des Lastenträgers aus der Rastausnehmung heraus in Richtung ihrer Ausgangsstellung gedrängt wird. Insbesondere sorgt die Federkraft für eine Verlagerung der Abdeckung derart, dass nach abgeschlossener Verlagerung die Durchtrittsöffnung wieder verschlossen, insbesondere vollständig, verschlossen ist.

Eine Weiterbildung der Erfindung sieht vor, dass sich die Abdeckung und die Durchtrittsöffnung zumindest über die Rastausnehmung und eine zu dieser benachbarten Stützausnehmung erstrecken, wobei die Abdeckung in der Stützausnehmung an einem Stützelement derart anliegt, dass sie in der Durchtrittsöffnung abgestützt ist. Neben der Rastausnehmung ist wenigstens eine Stützausnehmung vorgesehen. Insbesondere liegt auf jeder Seite der Rastausnehmung - in Längsrichtung gesehen - eine derartige Stützausnehmung vor. Beispielsweise ist nun der Rastausnehmung sowie der Stützausnehmung beziehungsweise jeder der Stützausnehmungen eine Durchtrittsöffnung zugeordnet, welche auch als einzige Durchtrittsöffnung durchgehend, also alle auf derselben Seite beziehungsweise nebeneinander angeordneten Rastausnehmungen und Stützausnehmungen der Dachleiste übergreifend, ausgebildet sein kann.

Sowohl die Rastausnehmung als auch die Stützausnehmung sind also durch die Durchtrittsöffnung aus der Außenumgebung der Dachträgereinrichtung zugänglich. Die Abdeckung erstreckt sich nun sowohl über die Rastausnehmung als auch die Stützausnehmung, sodass diese aus der Außenumgebung nicht einsehbar sind. Durch eine solche durchgehende Abdeckung wird der optische Eindruck der Dachträgereinrichtung deutlich verbessert. Selbstverständlich kann die Abdeckung alternativ mehrteilig ausgebildet sein. Besonders bevorzugt ist jedoch eine einzige, durchgehende Abdeckung, welche sowohl die Rastausnehmung als auch die Stützausnehmung übergreift und die Durchtrittsöffnung beziehungsweise die jeweilige Durchtrittsöffnung verschließt, insbesondere vollständig verschließt. Es ist nun vorgesehen, dass die Abdeckung lediglich im Bereich der Rastausnehmung derart verlagerbar ist, dass der Rastvorsprung durch die Durchtrittsöffnung hindurchgelangen kann. Im Bereich der Stützausnehmung wird dies durch das Stützelement verhindert, an welchem die Abdeckung derart anliegt, dass die Abdeckung nicht in die Stützausnehmung zum Freigeben der Durchtrittsöffnung hineinverlagert werden kann. Entsprechend ist sie zumindest in Richtung der Stützausnehmung in der Durchtrittsöffnung abgestützt beziehungsweise gehalten.

Eine Weiterbildung der Erfindung sieht vor, dass die Rastausnehmung und die Stützausnehmung durchgehend ausgebildet sind. Auf diese Weise ist eine besonders einfache Herstellung der Dachträgereinrichtung beziehungsweise der Dachreling möglich. Die Rastausnehmung und die Stützausnehmung stellen dabei lediglich Bereiche derselben Ausnehmung dar, welche durchgehend ausgebildet ist. Dabei weisen die Rastausnehmung und die Stützausnehmung beispielsweise im Wesentlichen denselben Querschnitt auf und gehen nahtlos ineinander über.

Eine Weiterbildung der Erfindung sieht vor, dass die Abdeckung im Bereich der Rastausnehmung mit einer Schubstange wirkverbunden ist, die durch eine Ausnehmung in einer Rückwand der Rastausnehmung in einen Innenraum der Dachreling geführt ist. Auch im Bereich der Rastausnehmung liegt also die Abdeckung an einem Element an. Im Gegensatz zu der Stützausnehmung ist dies jedoch nicht ein ortsfest angeordnetes Stützelement, welches vorzugsweise an der Rückwand der Ausnehmung beziehungsweise der Stützausnehmung befestigt ist. Vielmehr ist die Schubstange vorgesehen, welche in ihrer axialen Richtung verlagerbar ist, und dazu insbesondere in der Ausnehmung der Rückwand gelagert ist. Über die Schubstange kann beispielsweise die vorstehend beschriebene Federkraft auf die Abdeckung aufgebracht werden, sodass diese in nichtmontiertem Zustand des Lastenträgers wieder in ihre Ausgangsstellung zurückverlagert wird. Ein Federelement kann dabei auf der der Abdeckung abgewandten Seite der Schubstange an diese angreifen.

Eine Weiterbildung der Erfindung sieht vor, dass die Schubstange auf ihrer der Abdeckung abgewandten Seite mit der Erfassungseinrichtung zusammenwirkt. Entsprechend soll über die Position der Schubstange bezüglich der Rückwand auf den Abdeckungszustand der Durchtrittsöffnung geschlossen werden.

Eine Weiterbildung der Erfindung sieht vor, dass die Dachreling als Strangpressprofil vorliegt. Eine derartige Ausführungsform ist besonders vorteilhaft möglich, wenn die Rastausnehmung und die Stützausnehmung durchgehend ausgebildet sind und dabei - wie beschrieben - denselben Querschnitt aufweisen. Nach der Herstellung der Dachreling als Strangpressprofil kann beispielsweise im Bereich der Stützausnehmung das Stützelement angeordnet und/oder die Ausnehmung in die Rückwand der Rastausnehmung eingebracht werden.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Seitenansicht einer Dachträgereinrichtung mit einer auf einem Fahrzeugdach eines Kraftfahrzeugs befestigbaren Dachreling und einem auf dieser montierbaren Lastenträger,
- Figur 2: eine Längsschnittdarstellung durch die Dachreling im Bereich einer Rastausnehmung in einem nichtmontierten Zustand des Lastenträgers,
- Figur 3: einen Längsschnitt durch die Dachreling im Bereich der Rastausnehmung in einem montierten Zustand des Lastenträgers, und
- Figur 4: einen Längsschnitt durch die Dachreling im Bereich einer Stützausnehmung, in welcher ein Stützelement angeordnet ist.

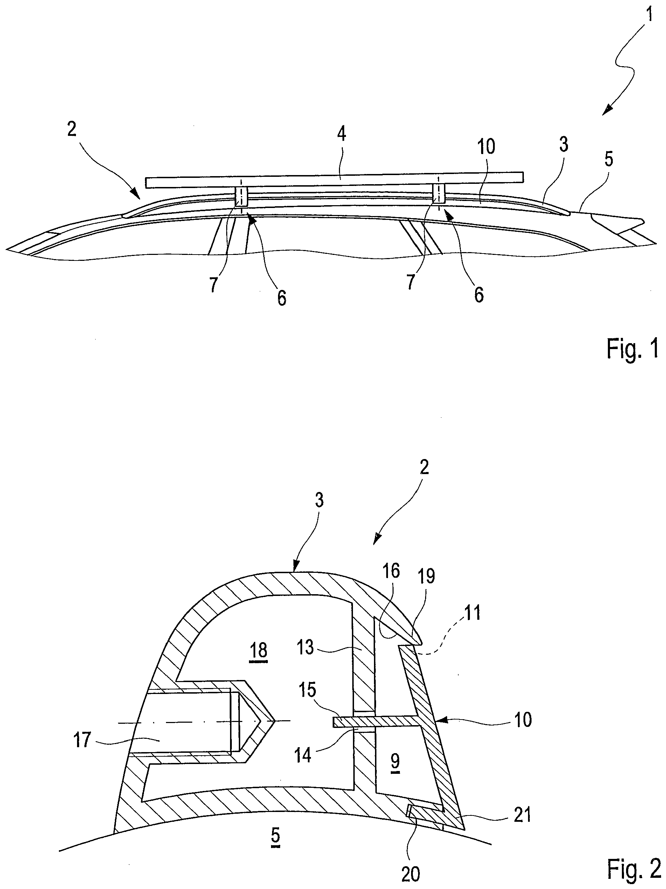

Die Figur 1 zeigt eine Seitenansicht einer Dachträgereinrichtung 1 für ein Kraftfahrzeug. Die Dachträgereinrichtung 1 besteht aus einer Dachreling 2 mit wenigstens einer Dachleiste 3 und aus einem hier lediglich schematisch dargestellten Lastenträger 4. Die Dachreling 2 ist auf einem Fahrzeugdach 5 befestigbar beziehungsweise befestigt. Die ihr zugeordnete Dachleiste 3 liegt beispielsweise über ihre gesamte Länge auf dem Fahrzeugdach 5 auf. Es kann jedoch auch vorgesehen sein, dass sie lediglich über wenigstens zwei Dachleistenfüße in Kontakt mit dem Fahrzeugdach steht. Die Dachleistenfüße sind beispielsweise an freien Enden der Dachleiste 3 angeordnet. Zwischen den Dachleistenfüßen kann die Dachleiste 3 von dem Fahrzeugdach 5 beabstandet sein. In der hier vorliegenden Ausführungsform soll die Dachleiste 3 über ihre gesamte Länge auf dem Fahrzeugdach 5 anliegen. Bevorzugt ist die Dachreling 2 permanent an dem Fahrzeugdach 5 befestigt, während der Lastenträger 4 lediglich bei Bedarf an der Dachreling 2 montiert wird. Beispielsweise liegen zwei zueinander parallel angeordnete Dachleisten 3 vor, welche sich in Längsrichtung des Kraftfahrzeugs über das Fahrzeugdach 5 hinweg erstrecken.

Der Lastenträger 4 ist bevorzugt zum unmittelbaren Aufnehmen von Lasten geeignet oder zumindest mit einer entsprechenden Aufnahmevorrichtung verbunden beziehungsweise verbindbar. Er besteht zum Beispiel aus wenigstens einer Querstrebe, welche auf der Dachleiste 3 beziehungsweise den Dachleisten 3 anordenbar ist. In letzterem Fall erstreckt sich also die Querstrebe von einer ersten der Dachleisten 3 zu einer zweiten, wobei diese beabstandet voneinander angeordnet sind. Der Lastenträger 4 verfügt über wenigstens eine Befestigungsvorrichtung 6, wobei in der hier vorliegenden Ausführungsform jeweils zwei Befestigungsvorrichtungen 6 für jede Dachleiste 3 vorgesehen sind. Jede Befestigungsvorrichtung 6 verfügt über zwei Haltearme 7, wobei diese paarweise derart angeordnet sind, dass sie die Dachleiste 3 nach der Montage des Lastenträgers 4 beidseitig umgreifen. Das bedeutet, dass einer der Haltearme 7 in lateraler Richtung auf einer Seite neben der Dachleiste 3 und ein weiterer der Haltearme 7 auf der gegenüberliegenden Seite der Dachleiste 3 angeordnet ist, sodass die Dachleiste 3 zwischen ihnen in lateraler Richtung formschlüssig und/oder klemmend gehalten ist. Jede der Befestigungsvorrichtungen 6 umgreift also die Dachreling 2 beziehungsweise zumindest eine der Dachleisten 3 beidseitig wenigstens bereichsweise.

Dabei greift ein hier nicht erkennbarer Rastvorsprung 8 in eine ebenfalls nicht erkennbare Rastausnehmung 9 ein. Diese Rastausnehmung 9 ist in nichtmontiertem Zustand des Lastenträgers 4 mittels einer Abdeckung 10 verschlossen. Die Abdeckung 10 liegt dabei in einer Durchtrittsöffnung 11 (hier nicht erkennbar) vor, über welche die Rastausnehmung 9 mit einer Außenumgebung der Dachträgereinrichtung 1 verbunden ist. Bei der Montage greift der Rastvorsprung 8 durch die Durchtrittsöffnung 11 in die Rastausnehmung 9 ein und ist in dieser nachfolgend rastend gehalten, sodass zumindest ein Abheben des Lastenträgers 4 in vertikaler Richtung durch eine Formschlussverbindung verhindert wird. Zwischen den Rastausnehmungen 9 liegt eine hier nicht erkennbare Stützausnehmung 12, welche - im Querschnitt gesehen - nahezu dieselbe Innenkontur aufweisen. Dabei können die Rastausnehmungen 9 und die Stützausnehmung 12 durchgehend ausgebildet sein, sodass sich also die Stützausnehmung 12 von einer ersten der Rastausnehmung 9 zu einer zweiten der Rastausnehmung 9 erstreckt und diese miteinander verbindet. Die Abdeckung 10 ist dabei derart ausgebildet, dass sie sowohl die Rastausnehmungen 9 als auch die Stützausnehmung 12 abdeckt.

Die Figur 2 zeigt einen Querschnitt der Dachreling 2 beziehungsweise einer der Dachleisten 3 im Bereich der Rastausnehmung 9 für einen nichtmontierten Zustand des Lastenträgers 4 (hier nicht dargestellt). Es wird deutlich, dass in diesem nichtmontierten Zustand des Lastenträgers 4 die Durchtrittsöffnung 11 von der Abdeckung 10 vollständig verschlossen ist, sodass also die Rastausnehmung 9 von außen beziehungsweise aus einer Außenumgebung der Dachträgereinrichtung 1 nicht sichtbar ist. Vielmehr ist die Rastausnehmung 9 vollständig von der Abdeckung 10 abgedeckt. Der Abdeckung 10 gegenüberliegend weist die Rastausnehmung 9 eine Rückwand 13 auf, die mit einer Ausnehmung 14 versehen ist. In dieser Ausnehmung 14 ist eine Schubstange 15 längsverschieblich gelagert. Die Schubstange 15 greift an ihrem einen Ende an der Abdeckung 10 an. Beispielsweise wirkt auf die Schubstange 15 eine Federkraft, welche die Abdeckung 10 in ihre in der Figur 2 gezeigte Ausgangsstellung drängt, in welcher sie die Durchtrittsöffnung 11 vollständig verschließt und dabei beispielsweise an einem von der Dachleiste 3 gebildeten Endanschlag 16 anliegt. Auf der der Rastausnehmung 9 gegenüberliegenden Seite der Dachleiste 3 kann eine Befestigungsaufnahme 17 für ein Befestigungselement (nicht gezeigt) des Lastenträgers 4 vorgesehen sein. Das Befestigungselement ist beispielsweise ein Bolzen, während die Befestigungsaufnahme 17 über ein entsprechendes Innengewinde verfügt, sodass der Bolzen in ihr verschraubt werden kann. Mithilfe des Befestigungsmittels und der Befestigungsaufnahme 17 ist somit eine zusätzliche Befestigung des Lastenträgers 4 an der Dachleiste 3 beziehungsweise der Dachreling 2 möglich.

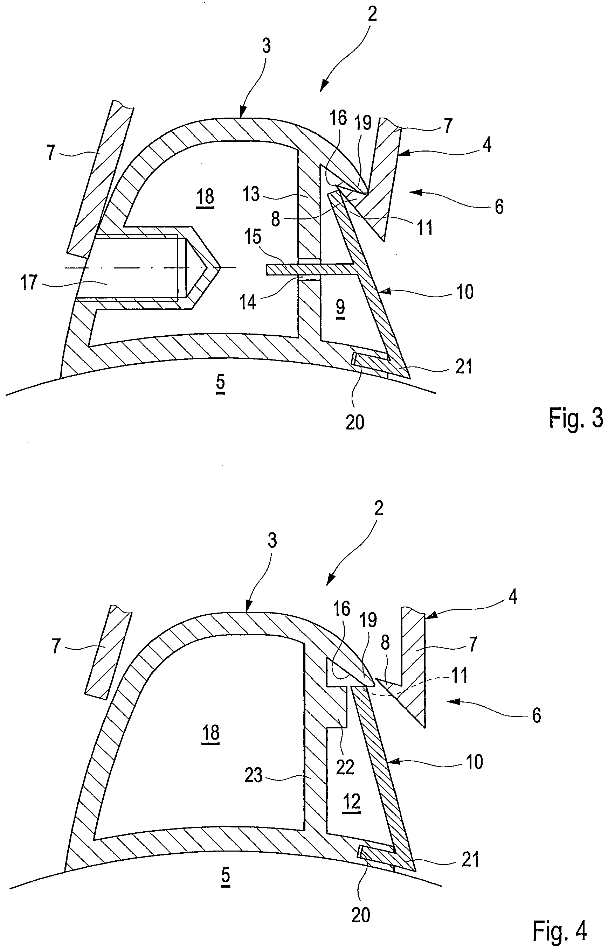

Die Figur 3 zeigt einen Querschnitt durch die Dachreling 2 im Bereich der Rastausnehmung 9 für einen montierten Zustand des Lastenträgers 4. Von dem Lastenträger 4 ist ein Teil der Befestigungsvorrichtung 6 erkennbar, nämlich zwei Haltearme 7, die die Dachleiste 3 beidseitig wenigstens bereichsweise umgreifen. Das bedeutet, dass die Haltearme 7 auf jeweils gegenüberliegenden Seiten der Dachleiste 3 (in Längsrichtung gesehen) an der Dachleiste 3 anliegen. Dabei weist einer der Haltearme 7 den Rastvorsprung 8 auf, welcher durch die Durchtrittsöffnung 11 hindurch in die Rastausnehmung 9 eingreift und dabei die Abdeckung 10 in die Rastausnehmung 9 hineindrängt. Entsprechend liegt die Abdeckung 10 nicht mehr an dem Endanschlag 16 an, sondern ist vielmehr von diesem beabstandet. Zusammen mit der Abdeckung 10 wird auch die Schubstange 15 verlagert, nämlich in Richtung eines Innenraums 18 der Dachleiste 3. Dies kann durch eine geeignete Erfassungseinrichtung festgestellt werden, sodass ein Abdeckungszustand der Durchtrittsöffnung 11 feststellbar ist. Auf diese Weise kann erkannt werden, ob ein Lastenträger 4 an der Dachreling 2 befestigt ist.

Der Rastvorsprung 8 wirkt mit einem Gegenrastvorsprung 19 der Dachreling 2 beziehungsweise der Dachleiste 3 zur Herstellung einer Hintergriffsverbindung zusammen. Der Gegenrastvorsprung 19 begrenzt die Rastausnehmung 9 dabei wenigstens bereichsweise. Die Hintergriffsverbindung verhindert ein unbeabsichtigtes Abnehmen des Lastenträgers 4 von der Dachreling 2 in vertikaler Richtung, also insbesondere eine Verlagerung von dem Fahrzeugdach 5 weg. Es ist erkennbar, dass die Abdeckung 10 durch Einpressen in eine Halteaussparung 20 an der Dachreling 2 beziehungsweise der Dachleiste 3 befestigt ist. Sie ist wenigstens bereichsweise elastisch ausgebildet, insbesondere nur in einem Gelenkbereich 21, sodass sie zwischen einer Geschlossenstellung (Figur 2) und einer Offenstellung (Figur 3) elastisch verschwenkbar ist. Die Abdeckung 10 liegt insoweit als Klappe vor und ist bereichweise schwenkbar bezüglich der Dachreling 2 gelagert.

Die Figur 4 zeigt einen Querschnitt durch die Dachreling 2 beziehungsweise die Dachleiste 3 im Bereich der Stützausnehmung 12, die sich zwischen den Rastausnehmungen 9, welche beabstandet voneinander angeordnet sind, erstreckt. Vorzugsweise liegen weitere Stützausnehmungen 12 auf der der jeweils anderen Rastausnehmung 9 abgewandten Seite jeder Rastausnehmung 9 vor. Grundsätzlich weist die Stützausnehmung 12 im Wesentlichen denselben Querschnitt auf wie die Rastausnehmung 9, also im Querschnitt gesehen nahezu dieselbe Innenkontur. Ausnahme ist lediglich ein Stützelement 22, das an einer Rückwand 23 der Stützausnehmung 12 angeordnet ist. Dieses Stützelement 22 ist derart ausgebildet, dass es in der Geschlossenstellung der Abdeckung 10 aus Richtung der Stützausnehmung 12 an der Abdeckung 10 anliegt. Wird also bei der Montage des Lastenträgers 4 die Befestigungsvorrichtung 6 im Bereich der Stützausnehmung 12 angeordnet, kann der Rastvorsprung 8 die Abdeckung 10 nicht in die Stützausnehmung 12 hineindrängen, sodass entsprechend keine Hintergriffsverbindung zwischen dem Rastvorsprung 8 und dem Gegenrastvorsprung 19 herstellbar ist.

Somit wird eine fehlerhafte Montage des Lastenträgers 4, insbesondere eine Montage in einer falschen Position an der Dachreling 2, effektiv verhindert. Insbesondere sind die Rastausnehmungen 9 und die dazugehörigen Rastvorsprünge 8 derart angeordnet, dass der Lastenträger 4 ausschließlich in der gewünschten Position bezüglich einer Längsrichtung des Kraftfahrzeugs an der Dachreling 2 befestigbar ist. Zu diesem Zweck weisen die Rastausnehmungen 9 in Längsrichtung vorzugsweise dieselben oder lediglich geringfügig größere Abmessungen auf als die Rastvorsprünge 8. Somit wird die Montage des Lastenträgers 4 an der Dachreling 2 lediglich in der gewünschten Position in Längsrichtung gesehen zugelassen. Gleichzeitig ist jedoch mithilfe der hier nicht dargestellten Erfassungseinrichtung, welche beispielsweise aus einem Magnet und einem Magnetfeldsensor besteht, ein zuverlässiges Feststellen eines Abdeckungszustands der Durchtrittsöffnung 11 möglich.

### BEZUGSZEICHENLISTE

- 1: Dachträgereinrichtung
- 2: Dachreling
- 3: Dachleiste
- 4: Lastenträger
- 5: Fahrzeugdach
- 6: Befestigungsvorrichtung
- 7: Haltearm
- 8: Rastvorsprung
- 9: Rastausnehmung
- 10: Abdeckung
- 11: Durchtrittsöffnung
- 12: Stützausnehmung
- 13: Rückwand
- 14: Ausnehmung
- 15: Schubstange
- 16: Endanschlag
- 17: Befestigungsaufnahme
- 18: Innenraum
- 19: Gegenrastvorsprung
- 20: Halteaussparung
- 21: Gelenkbereich
- 22: Stützelement
- 23: Rückwand

## Patentansprüche

1. Dachträgereinrichtung (1) für ein Kraftfahrzeug, mit einer auf einem Fahrzeugdach (5) des Kraftfahrzeugs befestigbaren Dachreling (2) und einem auf der Dachreling (2) montierbaren Lastenträger (4), wobei der Lastenträger (4) zumindest eine Befestigungsvorrichtung (6) aufweist, die nach der Montage des Lastenträgers (4) die Dachreling (2) wenigstens bereichsweise beidseitig umgreift und die über einen Rastvorsprung (8) verfügt, der nach der Montage durch eine Durchtrittsöffnung (11) in eine Rastausnehmung (12) der Dachreling (2) eingreift, und mit einer Erfassungseinrichtung, **gekennzeichnet durch**
eine Abdeckung (10), mittels der die Durchtrittsöffnung (11) in nichtmontiertem Zustand des Lastenträgers (4) verschließbar ist, wobei mittels der Erfassungseinrichtung ein Abdeckungszustand der Durchtrittsöffnung (11) feststellbar ist, wobei der Abdeckungszustand angibt, ob die Abdeckung (10) die Durchtrittsöffnung (11) verschließt oder ob die Abdeckung (10) **durch** die Montage des Lastenträgers (4) verlagert ist.

2. Dachträgereinrichtung nach Anspruch 1, **dadurch gekennzeichnet, dass** die Abdeckung (10) als Klappe ausgebildet ist und schwenkbar an der Dachreling (2) gelagert ist.

3. Dachträgereinrichtung nach einem der vorhergehenden Ansprüche, **dadurch gekennzeichnet, dass** die Erfassungseinrichtung wenigstens einen Magnet und zumindest einen Magnetfeldsensor aufweist.

4. Dachträgereinrichtung nach einem der vorhergehenden Ansprüche, **dadurch gekennzeichnet, dass** der Magnet an der Abdeckung (10) und der Magnetfeldsensor an der Dachreling (2) befestigt ist.

5. Dachträgereinrichtung nach einem der vorhergehenden Ansprüche, **dadurch gekennzeichnet, dass** die Abdeckung (10) nach der Montage in der Rastausnehmung (9) wenigstens,bereichsweise aufgenommen ist.

6. Dachträgereinrichtung nach einem der vorhergehenden Ansprüche, **dadurch gekennzeichnet, dass** sich die Abdeckung (10) und die Durchtrittsöffnung (11) zumindest über die Rastausnehmung (9) und einer zu dieser benachbarten Stützausnehmung erstrecken, wobei die Abdeckung (10) in der Stützausnehmung (12) an einem Stützelement (22) derart anliegt, dass sie in der Durchtrittsöffnung (11) abgestützt ist.

7. Dachträgereinrichtung nach einem der vorhergehenden Ansprüche, **dadurch gekennzeichnet, dass** die Rastausnehmung (9) und die Stützausnehmung (12) durchgehend ausgebildet sind.

8. Dachträgereinrichtung nach einem der vorhergehenden Ansprüche, **dadurch gekennzeichnet, dass** die Abdeckung (10) im Bereich der Rastausnehmung (9) mit einer Schubstange (15) wirkverbunden ist, die durch eine Ausnehmung (14) in einer Rückwand (13) der Rastausnehmung (9) in einen Innenraum (18) der Dachreling (2) geführt ist.

9. Dachträgereinrichtung nach einem der vorhergehenden Ansprüche, **dadurch gekennzeichnet, dass** die Schubstange (15) auf ihrer der Abdeckung (10) abgewandten Seite mit der Erfassungseinrichtung zusammenwirkt.

10. Dachträgereinrichtung nach einem der vorhergehenden Ansprüche, **dadurch gekennzeichnet, dass** die Dachreling (2) als Strangpressprofil vorliegt.

## Claims

1. Roof rack assembly (1) for a motor vehicle, having a roof rack (2) that can be fastened to a vehicle roof (5) of the motor vehicle, and having a load carrier (4) that can be mounted on the roof rack (2), wherein the load carrier (4) has at least one fastening device (6) which after installation of the load carrier (4) grips around the roof rack (2) on both sides, at least in sections, and has a latching projection (8), which after installation engages through a passage (11) with a latching recess (12) of the roof rack (2), **characterised by**
a cover (10) by means of which the passage (11) can be closed when the load carrier (4) is in an unmounted state, wherein, by means of the detection device, a covered state of the passage (11) can be detected, wherein the covered state indicates whether the cover (10) closes the passage (11) or whether the cover (10) is displaced by the installation of the load carrier (4).

2. Roof rack assembly according to claim 1, **characterised in that** the cover (10) is designed as a flap and is pivotably mounted on the roof rack (2).

3. Roof rack assembly according to one of the preceding claims, **characterised in that** the detection device comprises at least one magnet and at least one magnetic field sensor.

4. Roof rack assembly according to one of the preceding claims, **characterised in that** the magnet is fastened to the cover (10) and the magnetic field sensor is fastened to the roof rack (2).

5. Roof rack assembly according to one of the preceding claims, **characterised in that** the cover (10), after installation, is at least partially accommodated in the latching recess (9).

6. Roof rack assembly according to one of the preceding claims, **characterised in that** the cover (10) and the passage (11) extend at least over the latching recess (9) and a support recess adjacent to the latching recess, wherein the cover (10) rests against a support element (22) in the support recess (12) so as to be supported in the passage (11).

7. Roof rack assembly according to one of the preceding claims, **characterised in that** the latching recess (9) and the support recess (12) are formed continuously.

8. Roof rack assembly according to one of the preceding claims, **characterised in that** the cover (10) is operatively connected with a push rod (15) in the region of the latching recess (9), said pushrod being guided through a recess (14) in a rear wall (13) of the latching recess (9) into an internal space (18) of the roof rack (2).

9. Roof rack assembly according to one of the preceding claims, **characterised in that** the push rod (15) interacts with the detection device on a side of the pushrod which faces away from the cover (10).

10. Roof rack assembly according to one of the preceding claims, **characterised in that** the roof rack (2) is an extruded section.

## Revendications

1. Système de barres de toit (1) pour un véhicule automobile, avec une galerie de toit (2) pouvant être fixée sur un toit de véhicule (5) du véhicule automobile et un support de charges (4) pouvant être monté sur la galerie de toit (2), le support de charges (4) présentant au moins un dispositif de fixation (6), qui entoure au moins par endroits des deux côtés la galerie de toit (2) après le montage du support de charges (4) et qui dispose d'une partie faisant saillie d'enclenchement (8) qui, après le montage, vient en prise avec un évidement d'enclenchement (12) de la galerie de toit (2) par une ouverture de passage (11), et avec un système de détection, **caractérisé par**
un recouvrement (10), au moyen duquel l'ouverture de passage (11) peut être fermée lorsque le support de charges (4) n'est pas monté, un état de recouvrement de l'ouverture de passage (11) pouvant être constaté au moyen du système de détection, l'état de recouvrement indiquant si le recouvrement (10) ferme l'ouverture de passage (11) ou si le recouvrement (10) est déplacé par le montage du support de charges (4).

2. Système de barres de toit selon la revendication 1, **caractérisé en ce que** le recouvrement (10) est réalisé comme un volet et est logé au niveau de la galerie de toit (2) de manière à pouvoir pivoter.

3. Système de barres de toit selon l'une quelconque des revendications précédentes, **caractérisé en ce que** le système de détection présente au moins un aimant et au moins un capteur de champ magnétique.

4. Système de barres de toit selon l'une quelconque des revendications précédentes, **caractérisé en ce que** l'aimant est fixé au niveau du recouvrement (10), et le capteur de champ magnétique est fixé au niveau de la galerie de toit (2).

5. Système de barres de toit selon l'une quelconque des revendications précédentes, **caractérisé en ce que**, après le montage, le recouvrement (10) est reçu au moins par endroits dans l'évidement d'enclenchement (9).

6. Système de barres de toit selon l'une quelconque des revendications précédentes, **caractérisé en ce que** le recouvrement (10) et l'ouverture de passage (11) s'étendent au moins au-dessus de l'évidement d'enclenchement (9) et d'un évidement d'appui adjacent à celui-ci, le recouvrement (10) reposant dans l'évidement d'appui (12) contre un élément d'appui (22) de telle manière qu'il est appuyé dans l'ouverture de passage (11).

7. Système de barres de toit selon l'une quelconque des revendications précédentes, **caractérisé en ce que** l'évidement d'enclenchement (9) et l'évidement d'appui (12) sont réalisés de manière continue.

8. Système de barres de toit selon l'une quelconque des revendications précédentes, **caractérisé en ce que**, dans la zone de l'évidement d'enclenchement (9), le recouvrement (10) est en liaison active avec une bielle (15), qui est guidée à travers un évidement (14) dans une paroi arrière (13) de l'évidement d'enclenchement (9) dans un espace intérieur (18) de la galerie de toit (2).

9. Système de barres de toit selon l'une quelconque des revendications précédentes, **caractérisé en ce que** la bielle (15) coopère sur son côté opposé au recouvrement (10) avec le système de détection.

10. Système de barres de toit selon l'une quelconque des revendications précédentes, **caractérisé en ce que** la galerie de toit (2) se présente sous la forme d'un profilé extrudé.
